(19) **Europäisches Patentamt European Patent Office Office européen des brevets**

(11) **EP 3 390 863 B1**

(12) **EUROPEAN PATENT SPECIFICATION**

(45) Date of publication and mention of the grant of the patent:
**27.07.2022 Bulletin 2022/30**

(21) Application number: **16808693.2**

(22) Date of filing: **09.12.2016**

(51) International Patent Classification (IPC):
*F16H 55/26* (2006.01)    *E05F 11/42* (2006.01)

(52) Cooperative Patent Classification (CPC):
**E05F 11/426; F16H 55/26;** E05Y 2201/722;
E05Y 2201/724; E05Y 2800/406; E05Y 2800/422;
E05Y 2900/104; E05Y 2900/148; E05Y 2900/542;
E05Y 2900/55

(86) International application number:
**PCT/EP2016/080455**

(87) International publication number:
**WO 2017/102586 (22.06.2017 Gazette 2017/25)**

(54) **FLEXIBLE RACK WITH PAIRED STEEL CORDS EMBEDDED IN POLYMER**

FLEXIBLES GESTELL MIT GEPAARTEN, IN POLYMER EINGEBETTETEN STAHLKORDS

DISPOSITIF À CRÉMAILLÈRE SOUPLE PRÉSENTANT DEUX CÂBLES D'ACIER INCORPORÉS DANS UN POLYMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2015 EP 15201002**

(43) Date of publication of application:
**24.10.2018 Bulletin 2018/43**

(73) Proprietor: **Bekaert Advanced Cords Aalter NV
9880 Aalter (BE)**

(72) Inventors:
• **BERT, Katrien
8160 Eksaarde (BE)**

• **CLAUWS, Raf
8792 Desselgem (BE)**
• **DHULST, Chris
8720 Oeselgem (BE)**

(74) Representative: **Seynhaeve, Geert Filiep
NV Bekaert SA
IPD - PC6030
Bekaertstraat 2
8550 Zwevegem (BE)**

(56) References cited:
**EP-A1- 0 499 135     EP-A1- 1 270 190
JP-A- H01 145 463     JP-A- 2011 247 311
JP-U- H01 100 509**

**Description**

**Technical Field**

The invention relates to a flexible rack for use in a drive system. The flexible rack is specifically designed to move parts back and forth such as for example the rapier in a textile loom, a door panel in an elevator, a window pane in a vehicle door, a sunroof in a car or any other similar application.

**Background Art**

For the purpose of this application, focus will be given to a flexible rack for drive systems as used in vehicles for example to move up and down side window panels or to move back and forth sunroofs, in glass or textile, interior sun shades, roller blinds or exterior covers. However, it will be clear that the inventive principles can be extended to any other application wherein a back and forth movement over a length of decimetres to metres is desired.

One system for opening or closing sunroofs comprises cords that are held under tension by and guided over pulleys (see e.g. US3137491). The system needs a lot of pulleys, takes quite some space (as the cords must go back and forth) and is not easy to mount and repair. An alternative system is based on toothed belts that are held under tension (US 6786540).

Other systems are based on transmission cables such as already described in US1983962 (1934). Such cable comprises a core - usually assembled metallic wires - with a thick metal wire twisted and hammered around the core. The pitch of the helix of the thick metal wire leaves sufficient space between turns in order to allow a drive pinion to grip into the helix and drive the cable back and forth. As such systems work both ways - in tension and compression - no reversing pulleys are needed thereby saving space and cable length.

Of course the cable must run in a tubular casing or through sleeves to guide the cable and to prevent buckling when coming under compression. This guiding does not constrain the bending in a single plane and many systems require that the wire moves out of the flat plane in a track with bends in different directions.

While such systems work satisfactory they do generate quite some noise:

- There is the engagement noise generated by the drive pinion teeth gripping and leaving the helix. As the round helix wire does not allow for a gentle exit of the pinion tooth this generates noise;
- There is also the scraping noise as the helix wire scrapes the side of the guide elements;
- When the drive cable is not held in the sleeves or cable guides, it can vibrate - for example in stationary car with running engine - and generate a rattling noise

The current solution to prevent the generation of noise is to provide a brush like flocking in between the helical winding (see e.g. DE3513093). The flocking serves to hold the wire central in the guide and at the same time dampens the vibration. Although this reduces the noise, the solution is not entirely satisfactory in that the flocking wears and generates dust. After prolonged use the noise increases. An alternative suggested solution was to coat the complete wire with a plastic material (DE7136899U).

Already at an early stage it has been contemplated to make a flexible rack that comprises a flexible but strong core on which a plastic jacket is deposited that is provided with teething that engages with a drive gear.

DE 1003517 is an early example of this wherein a metal wire, metal strand or metal cord is coated with a polymer jacket that is provided with teeth imprinted into the jacket. The teeth can extend over about half of the perimeter of the cable or they can be provided as pockets, cavities, recesses or depressions wherein the teeth of the drive gear engage. The central wire can be off centre or can be central. The cross section of the flexible rack can be substantially round or can be of oval shape.

EP 0 499 135 discloses a toothed, flexible transmission cable, a method for is manufacture, and a transmission mechanism including the cable. Optionally, the flexible transmission cable is provided with one central reinforcing core that is, for example, a thin steel wire. The flexible transmission cable is made by extrusion followed by embossing of the teeth in the still soft polymer.

An alternative systems based on a toothed belt is described in US2012/0032476A1. The toothed belt is reinforced by two metal wires situated at the outer sides of the toothed belt. The outer sides of the toothed belt are held glidingly within a housing provided with guide tracks that suppress the deformation of the toothed belt when being under compression. The belt has a substantially rectangular cross section and in order to allow the belt to bend outside the plane, the guide tracks have to be of a complicated nature.

Likewise JP 2011 247311 A describes a rack gear of substantially rectangular cross section wherein a first twisted wire and a second twisted wire are arranged in parallel and held in a resin material that is proved with teeth. The twisting direction of first and second twisted wire is opposite thereby preventing the twisting of the rack gear.

Instead of using a belt of substantially rectangular cross section, US5150631 suggests the use of a flexible thermoplastic rack bar of substantially round cross section where the reinforcement of the rack bar is confined to a cross sectional area that lies height wise between a head and a root of a rack teeth. The reinforcement may be a continuous fibre strand - for example a steel rope - at each side of the rack teeth. Although this arrangement allows a simple round guiding system, the lateral reinforcement complicates the bending of the rack out of the plane.

**Disclosure of Invention**

The main objectives of the invention are therefore to provide a flexible rack that does not need a complicated guiding system and that can easily be mounted. The rack must run smoothly in the guiding system and not generate noise when engaging with the drive gear, when running through and when being stationary in the guides. Furthermore the flexible rack must be able to withstand the forces and conditions that are nowadays customary in the field. For example the flexible rack must be able to withstand compressive and tensile forces during opening and closing and also peak forces that occur at closure of a door window or when braking with open sunroof. Furthermore the polymer flexible rack must remain operational at temperatures between -40°C and +90°C.

The inventive flexible rack is defined by claim 1.

The flexible rack is for engagement with the gear of a drive system. The flexible rack comprises two steel cords that are disposed in the longitudinal direction. The steel cords are in substantially parallel relationship to one another with which is meant that the perpendicular distances between the centres of the steel cord remain constant within tolerances (say within 20%, or 10% of the diameter of the steel cord). The flexible rack further comprises a polymer jacket. The steel cords are completely internal to and surrounded, encased, covered by the polymer at least over the length of the rack. This in order to avoid any possible corrosion that might occur and to prevent wear and tear of the steel cord. The polymer jacket is provided with recesses (alternative but equivalent words are 'pockets', 'holes', 'depressions', 'cavities') along the length of the flexible rack for receiving the teeth of the drive gear. It follows that the recesses have the corresponding spatial periodicity or pitch as the gear teeth.

The perpendicular cross section of the flexible rack can be inscribed within a circle with the smallest possible diameter still enclosing the cross section: the minimum circumscribed circle. The minimum circumscribed circle can be identified on the perpendicular cross section by means of digital imaging software. The diameter 'D' of this 'minimum circumscribed circle' is between 3 and 8 mm, or between 4 to 6 mm for example 4.8 to 5.2 mm.

In a cross section a mirror plane can be identified that substantially mirrors the cross section onto itself. The skilled person will understand that such mirroring is not absolute - small irregularities between left and right remain possible - but knows that by this is understood that somewhere there is a plane of symmetry dividing the cross section approximately in the middle.

The two steel cords are arranged in a plane substantially perpendicular to the mirror plane. Steel cords are arranged in a plane substantially perpendicular to the mirror plane when the centres of the steel cords are situated in a plane having an angle within +/- 10° of the true perpendicular to the mirror plane. The substantially perpendicular plane is a local perpendicular plane, not a plane extending over the whole length of the flexible rack.

Steel cords are filaments or strands twisted together. This can be done in a left turning direction called the 'S' lay or in a right turning direction called 'Z' lay. The flexible rack is characterised in that the two steel cords have equal numbers of S- and Z-lay cords. The lay direction of the steel cord is the lay direction of the last winding step when producing the steel cord.

The inventors found that when there is an imbalance in the number of S and Z cords the flexible rack will tend to twist after production. This is attributed to the fact that after the coating of the steel cord with a hot polymer, the polymer shrinks and brings the steel cord under compression. The compression will force the steel cord in a direction that tends to open, untwist or unwind the cord. This results in a twisted rack wherein the line of recesses forms a helical track on the surface of the flexible rack. This is an undesirable situation e.g. for mounting the rack. Therefore it is preferred that the number of steel cords in each lay direction is equal i.e. the total number of steel cords is even.

Furthermore - as different steel cords show a different tendency to turn under compression - it is best that all steel cords are of the same construction. Balancing can be further improved by for example putting all 'S' lay direction steel cords to the left (or right) and all 'Z' lay direction steel cords to the right (or left). It is however preferred that the lay direction between adjacent steel cords alternate (such as for example S-Z-S-Z) in order to diminish residual stress in the polymer jacket itself.

Compared to the situation wherein only one single steel cord is used, the use of an even number of steel cords also has the following advantage: Due to the fact that the presence of metal filaments is now distributed in the width of the cross section, the same strength of the flexible rack can be obtained with a thinner - but wider - reinforcement. Consequently, the recesses can extend deeper into the polymer jacket thereby increasing the force that can be transmitted by the flexible rack. Another advantage is that by spreading the distribution of steel filaments over a larger width the anchoring force of the steel cords increases as the contact surface increases.

However, increasing the width of the reinforcement has the disadvantage that the bending stiffnesses in the direction parallel to the plane of the steel cords become too large. It is therefore a preferred embodiment that the number of steel cords is limited to two, wherein the steel cords are of equal construction but opposite in lay direction i.e. are mirror constructions of one another.

The configuration of how the filaments are positioned in the steel cord - denominated by 'construction' - also has an influence on the behaviour of the flexible rack. Steel cords exist in the form of strands or ropes. In a strand subsequent layers of steel filaments are helically wound around a core. Those filaments show a first-order helical deformation i.e. take the form of a helix. The core can be a single wire that is substantially straight which represents a zero-order helical deformation. Or the core can itself be a strand of two to five filaments twisted together without a filament in the centre. Those two to five filaments will also show a first-order helical deformation. The different layers of the steel strand may have equal or different lay lengths and directions.

In this respect steel cords with filaments that only show first-order helical deformation are somewhat more preferred than steel cords having zero and first order helical deformation. As filaments with zero order helical deformation are relatively straight in the steel cord, they tend to wick out of the flexible rack when being subjected to repetitive tensile and compressive forces during use of the flexible rack. Furthermore in the case of a plane of steel cords this is even more pronounced in that the off-axis position of the steel cords will induce compressive and tensile forces also during bending in the plane of the steel cords.

A steel cord can also be a rope composed of several outer strands that are twisted around a core strand. The outer strands themselves will obtain a first-order helical deformation that will add to the degree of deformation of the filaments. Hence the outer strands will show filaments that have a second-order helical deformation or a first-order helical deformation (if the core of the outer strand is a single wire). The core strand may show zero-order or first order helical deformed wires. The degree of helical deformation can be progressed by making a rope of a rope. But in practise second-order helical deformation is the highest degree of deformation given and corresponds to a helix where the central axis has on its turn the form of a helix.

Steel cords that comprise filaments with second-order helical deformation are preferred for reinforcing the flexible rack with more than one steel cord, the steel cords being organised in a single plane. Hence those steel cords may show filaments having zero order, first order helical deformation but must have filaments of second order helical deformation. Even more preferred is that the filament in the steel cords have only first and second order helical deformation i.e. no zero order helical deformation for the reasons previously described.

Typical constructions that are preferred are therefore

- 3x3 (three filaments twisted together into a strand, three of such strands twisted together into a rope) in which all filaments have second order helical deformation. Similar constructions are 3x4, 4x3 or 4x4;
- 7x3 (three filaments twisted together into a strand, seven of such strands twisted together into a rope) in which the filaments of the core strand have first order helical deformation and wherein all filaments of the outer strands have second order helical deformation. A similar and equivalent type is 7x4. An even more preferred construction is (3+5x7) wherein a core strand of three filaments twisted together is surrounded by five outer strands consisting of a single core filament around which six outer filaments are twisted. The cord comprises 8 first order and 30 second order helix deformation filaments.
- Likewise 4x7 has 4 filaments of first order (the centre wires of the seven wire strands) and 24 filaments of second order helical deformation;
- 7x7 (around a single filament six filaments are twisted forming a strand, around one strand six other strands are subsequently twisted). This construction has 1 zero order filament, 12 first order and 36 second order filaments. By leaving the single core out, one obtains a more preferred construction.

In the flexible rack according the invention, steel cords in the form of ropes are also preferred because the surface of such ropes is rough and polymer can ingress in between the outer strands. In this way a good mechanical anchoring between the steel cords and the polymer jacket can be obtained.

When using a mechanically weaker polymer, e.g. a polymer with a low modulus and/or tensile strength, the flexible rack will tend to fail first at the teeth of the rack rather than by the loss of anchoring force between polymer and steel cords. For those polymers it may make no difference whether a steel cord strand or a steel cord rope is used as reinforcement.

However with mechanically stronger polymers with higher moduli and tensile strength, the teeth will withstand the forces much better and for those kind of polymers the anchoring provided by steel cord strands may be insufficient. In that case it is advised to use a rope comprising filaments having second order helical deformation.

Another alternative solution to increase the anchoring force is to use a wrap or wraps. A 'wrap' is a single thread that is helically twisted around a core steel cord i.e. the wrap has first order helical deformation. When only one core steel cord is encircled, the wrap or wraps are considered part of the steel cords. In a particular preferred embodiment the wrap or wraps circumscribe two steel cords (also possibly comprising a wrap on their own). Thereby the steel cords are held closely together reducing the distance between the centres. Two cords are present that are mirror constructions from one another.

Typically the wrap has a very short lay length (for example between 2 and 10 mm, for example 2.5 to 5 mm). In one embodiment the wrap may have the same lay length as the distance between consecutive recesses. In another embodiment the wrap may have a lay length that is a multiple of the distance between consecutive recesses. Of course there is no need to have a correspondence between the periodicity of the recesses and the lay length of the wrap as long as the wrap wire is not too thick in that it would interfere with the bottom of the recesses.

Instead of a single wrap there may be two or even more wraps. In case of two wraps they can be in the same lay direction with the same lay length for example separated one half of a lay length from each other. Alternatively the two wraps can be in opposite directions.

The wrap filament can be a fine steel wire e.g. a wire of 0.15 mm or thinner. Or the wrap may be an organic monofilament or a yarn made of poly-aramide fibres, poly(p-phenylene-2,6-benzobisoxazole) fibres, polyurethane fibres, carbon fibres, polyolefin fibres, polyamide fibres, polyester fibres , polycarbonate fibres, polyacetal fibres, polysulfone fibres, polyether ketone fibres , polyimide fibres, polyether imide fibres or mixtures thereof.

As the wrap is oriented oblique to the axis of the steel cords it acts as a screw that is encased in the polymer jacket thereby greatly increasing the anchoring force. A wrap has a further advantage in that - when the flexible rack is subjected to compression - the wrap holds the steel filaments or the steel cords together and prevents them from opening. Hence, they prevent the steel cords from drifting apart when under compression. A wrap therefore increases the compression resistance of the steel cords and therefore the compression resistance of the complete flexible rack.

The steel filaments that make up the steel cords are made out of plain carbon steel or stainless steel or even out of low carbon steel. A plain carbon steel composition typically contains at least 0.65 % of carbon, a manganese content ranging from 0.30 % to 0.70%, a silicon content ranging from 0.15% to 0.30%, a maximum sulphur content of 0.03%, a maximum phosphorus content of 0.30%, all percentages being percentages by weight. There are only traces of copper, nickel, molydenum and / or chromium.

A low carbon steel typically has a composition of between 0.04 wt % and 0.20 wt % of carbon while the other named elements are in similar ranges as that for high carbon steel except that copper may be present up to 0.18 wt%.

Preferred stainless steels contain a minimum of 12% by weight of Cr and a substantial amount of nickel. More preferred stainless steel compositions are austenitic stainless steels as these can easily be drawn to fine diameters. The more preferred compositions are those known in the art as AISI 302 (particularly the 'Heading Quality' HQ), AISI 301, AISI 304, AISI 314 and AISI 316.

Although in the inventive flexible rack in general the tensile strength is less important than the longitudinal or bending stiffness a minimal tensile strength of at least 1770 N/mm$^2$ is expected from the filaments. A higher tensile strength can be obtained by using higher carbon levels and/or by strain hardening the wire by wire drawing. In this way tensile strengths in excess of 2000 N/mm$^2$, or even 2400 N/mm$^2$ or more than 2700 N/mm$^2$ can easily be obtained. The modulus of the steel itself is always between 190 000 to 200 000 N/mm$^2$.

Preferably the steel filaments are covered with a corrosion inhibiting coating such as a zinc coating or a zinc-aluminium coating (Bezinal® of Bekaert). This can be combined with an adhesion enhancing coating that is selected to adhere the polymer used in the polymer jacket to the steel cord.

The diameter of the filaments '$\delta$' plays a key role in the longitudinal and bending stiffness of the steel cord. The longitudinal stiffness scales with the metallic surface area of the steel cord i.e. with '$\delta^2$' while the bending stiffness scales with '$\delta^4$' making the choice of filament diameters a sensitive matter. Typically the diameter of the filaments will be between 0.12 to 0.30 mm and more preferably between 0.12 to 0.25 mm for example between 0.14 to 0.22. In a single steel cord different filament diameters maybe used. In the mentioned ranges the end limits are included. The combination of end limits is herewith explicitly included.

The cross section of the flexible rack is of a substantially circular shape. Therewith is meant that the 'out-of-roundness ratio' of the difference between maximum and minimum calliper diameter (also called Feret diameter) to the average of maximum and minimum calliper diameter remains smaller than 15% for example smaller than 10% or even lower than 5%, but in any case larger than or equal to 0%. The calliper diameter is the diameter measured between the two parallel jaws of a calliper. The cross section is not necessarily convex as recesses are provided in the flexible rack. Also additional grooves or flats along the length of the rack can be provided in order to guide the flexible rack in the guide channels.

The introduction of two steel cords arranged in a plane induces a difference in the bending stiffness in the different bending directions of the flexible rack. For the purpose of this application, when the flexible rack is curved by a force and remains in the plane formed by the steel cords, this will be called 'the bending stiffness in the plane of the steel cords'. The moment axis of the force inducing the bending is then oriented perpendicular to the plane of the steel cords.

Mutatis mutandis, when the flexible rack is curved and remains in the mirror plane of the flexible rack the resulting bending stiffness will be called 'the bending stiffness perpendicular to the plane of the steel cords'. The moment axis of the force inducing the pending is then perpendicular to the mirror plane.

The 'bending stiffness $(EI)_\parallel$ of the flexible rack is the proportionality constant between the curvature applied $(\Delta\theta/\Delta s)$ in (mm$^{-1}$) (i.e. the change in tangent angle along the length of the bent flexible rack) and the moment $(M_\parallel)$ (in Nmm) induced :

$$M_\parallel = (EI)_\parallel \times (\Delta\theta/\Delta s)$$

In principle the bending stiffness $(EI)_\parallel$ is the product of the bending modulus E and the geometric inertial moment *I* in the direction of the bending but for the purpose of this application this product will be regarded as one number. The subscript '$\parallel$' indicates that this is the bending stiffness in the plane of the steel cords, the subscript '$\perp$' will be used to indicate the bending stiffness in the plane perpendicular to the plane of the steel cords: $(EI)_\perp$. The bending stiffness is in this application expressed in Nmm$^2$.

Bending stiffness is generally measured in a three point bending test. A sample of the flexible rack is supported at sliding support points separated by a distance. At the middle the sample is impressed by a roll perpendicular to the sample. The force 'F' on the roll (in N) is then measured as a function of the deflection 'S' (in mm).

As the steel cords are connected to one another through the polymer jacket, the relation between bending moment and curvature may exhibit non-linear behaviour in particular when the distance between the steel cords is large. As in that case the determination of the bending stiffness is prone to interpretation, for the purpose of this application an equivalent measure for bending stiffness will be used:

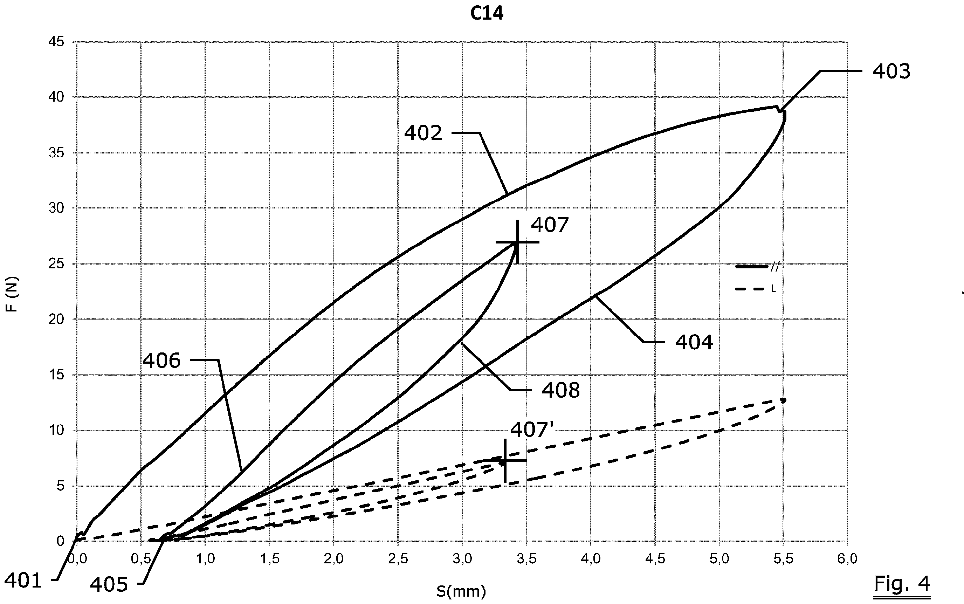

The measurement is made as follows (the references are to Figure 4 to illustrate the track but are not limited to that embodiment):

- When making the measurement on the flexible rack care must be taken that the deflection is perpendicular or parallel to the plane of the steel cords.

- Care must also be taken that the sample does not tilt when being bent therefore the applied deflection is generally kept low and the ends are prevented from axial rotation. The distance between the support points is set to about 13 times the diameter 'D' of the minimum circumscribed circle of the flexible rack.

- A first load cycle is applied starting from the position where a force of 0.1 N is sensed on the roll. This starting position is indicated 401. While the force is measured the roll indents the sample for a displacement equal to the diameter 'D' of the minimum circumscribed circle. This end position is called 403;

- Thereafter the roll is moved back until the force sensed becomes 0.1 N again. This position is called 405. When this position is reached, the movement of the roll is again reversed until a deflection of half of the diameter 'D' is reached when starting from 405. This is at position 407. The force at that position 407 will be called 'bending force at D/2 deflection on second cycle' or 'Specific Bending Force' for short and abbreviated as $F_{2\perp}(D/2)$ when the deflection is perpendicular to the plane of the steel cords and $F_{2\parallel}(D/2)$ when the deflection is in the plane of the steel cords;

- Measurements are performed at room temperature.

It will be clear to the skilled person that the 'bending force at D/2 deflection on second cycle' is proportional to the 'bending stiffness'.

As the polymer jacket mechanically connects the two steel cords to one another, the bending stiffness in the plane of the steel cords will always be higher than the bending stiffness perpendicular to the plane of the steel cords. If there would be no polymer jacket the bending moments would be equal. Next to the steel cords, also the polymer jacket makes a contribution to the bending stiffness but - as the cross section of the flexible rack is of a substantially circular shape - this contribution is substantially equal in both bending directions.

Although the inventors had somehow expected that even putting only two steel cords side by side, would result in a bending stiffness in the plane of the steel cords that would be much too high this turned out not to be the case. The additional stiffness perpendicular to the plane of the steel cords holds the flexible rack better in the bends of the guides, thereby preventing additional rattling noise. On the other hand, the bending stiffness was not that excessive in that it would prevent the flexible rack to be guided throughout the guides. The claimed ranges following provide a good balance between both effects.

According the experiments of the inventors, the bending force at D/2 deflection on second cycle of the flexible rack in the plane of the steel cords must at least be 1.5 times the bending force at D/2 deflection on second cycle of the flexible rack perpendicular to the plane of the steel cords. Phrased differently but equally valid: the Force Ratio of the Specific Bending Force in the plane to the Specific Bending Force perpendicular to the plane is larger or equal than 1.5, or in formula :

$$1.5 \leq {F_{2\parallel}(D/2)}\Big/{F_{2\perp}(D/2)}$$

More preferred is if the ratio is larger than or equal to 2 or even larger than or equal to 2.5.

At the other end the Force Ratio in Specific Bending Force may not become too large. When the ratio becomes larger than 10, the force needed to guide the flexible rack through a channel that bends out of one plane becomes excessive and too much friction is generated. In formula:

$$\frac{F_{2\parallel}(D/2)}{F_{2\perp}(D/2)} < 10$$

Even more preferred is if it is lower than 6 or even lower than 5.

The invention allows to select the range according the application of the flexible rack. If the flexible rack is to be used in an application wherein bending outside a single plane is necessary (for example for use in a drive system for a sun roof) it is best that the Force Ratio is between 1.5 to 5 for example around 4. When the flexible rack is to be used in an application wherein it must remain within a single plane the Force Ratio is between 5 to 10 for example 5 to 6.

To be noted is that - because the ratio of forces is taken - this ratio is not very sensitive to the distance between the supports in the test: if for example a distance between the supports between 10 and 15 times the diameter 'D' is taken the ratio will not be affected. Likewise when the amount of deflection at the second cycle differs from between 0.45 to 0.55 times 'D' this will not affect the ratio either. This is of course under the proviso that for measuring the perpendicular and in plane deflection these conditions of distance between supports and amount of deflection are kept identical.

An important characteristic of the flexible rack is therefore that when considering the bending in different directions the most preferred direction for bending (i.e. the direction with the lowest bending stiffness) is perpendicular to the plane of the steel cords and the least preferred direction for bending (i.e. the direction with the highest bending stiffness) is in the plane of the steel cords. There are no intermediate bending directions that have higher or lower bending stiffness values.

Simple mechanical theory learns that the in plane bending stiffness will be the sum of three terms: (1) the total bending stiffness of the steel cords (2) the stiffness due to the squared distance between the cord and the neutral plane times the longitudinal stiffness of the steel cords (in this bending direction the neutral plane will correspond to the mirror plane) and (3) the contribution of the polymer jacket. The contribution of (2) is the largest, followed by (3) and ending with (1). The distance between the steel cords and the longitudinal stiffness of the cords has a large influence on the bending stiffness in the plane.

It is therefore preferred that the distance between the centres of adjacent steel cords is limited to between 0.80 and 2.5 times the circumscribed diameter 'd' of the individual steel cords. As the cords are alternating in lay direction they can 'screw' into one another thereby making it possible to have a distance of only 0.80×d between their centres. There is then a phase difference of 180° between both screws. If the distance between their centres is larger than 2.5×d the flexible rack becomes too stiff when deflecting in the plane of the steel cords.

Again this parameter can be varied depending on the intended application of the flexible rack. If the rack must bend out of the plane, the distance between adjacent steel cord centres is best between 0.8 and 1.5×d. If the rack must preferably remain within one plane during use, the distance between the centres is best between 1.5×d to 2.5×d. It is best that the middle of the line connecting the centres of the two middle steel cords is as close as possible to the mirror plane. The deviations should be less than 10% of 'D'.

In a particularly preferred embodiment the centres of the steel cords remain within the transversal width of the recesses. With the transversal width is meant that dimension perpendicular to the mirror plane of the flexible rack where the recesses are at maximum width. In that case the polymer between recesses that interacts with the gear teeth is best supported and carried by the two longitudinal steel cords resulting in an optimal force transfer from gear to steel cords.

Preferred is also that the total width covered by the steel cords i.e. the sum of the diameters of the steel cords is at least 40% of the width of the recesses. Even more preferred is if this ratio is more than 50%, or above 60%. Preferably it is less than 90%. The steel cords support the teeth that are built on it. If not enough steel cord is present below the teeth they are insufficiently supported and will tend to yield earlier under the force moments transmitted to the tooth from the gear teeth.

The more surface the steel cords occupy in the cross section of the flexible rack, the more the rack will become stiffer both in longitudinal direction as in perpendicular bending. In order not to have an overall too stiff flexible rack, it is better that the diameter of the steel cords 'd' is less than 40% of the diameter 'D' of the minimum circumscribed circle of the flexible rack i.e. d<0.40xD . Even more preferred is if the diameter 'd' of the steel cords is less than 30% (d<0.30×D). Of course the diameter 'd' of the steel cord cannot become too small as otherwise there is not enough longitudinal strength available. 'd' must therefore be larger than 0.03 times 'D' or better larger than 0.05 times 'D'.

When bending the flexible rack perpendicular to the plane of the steel cords, the neutral plane will be close to the plane in which the centres of the steel cord are situated provided this 'centres plane' is close to the centre of the minimum circumscribed circle. If the perpendicular distance between the centres plane and the centre of the minimum circumscribed circle becomes too large the neutral plane will shift out of the centres plane and the stiffness in the perpendicular bending direction will depend on the sense in which the bending is made: towards the recesses or away from the recesses. This leads to asymmetry in the perpendicular bending direction which is less desirable. Therefore the perpendicular distance between the centre of the minimum circumscribed circle and the plane through the centres of the steel cord must remain below 20% of the diameter 'D' of the minimum circumscribed circle. Preferred is that this distance is small for example smaller than 15% or 5% of 'D' but it is not needed for the functioning of the rack that it is zero.

At the other end, due to the presence of the recesses, the polymer jacket will not show a circumferentially uniform bending behaviour. Therefore some distance between the centres plane and the centre of the minimum circumscribed circle is allowed for example this distance can be more than 0.5% to 1 % of 'D' in the direction away from the recesses in order to compensate for the presence of those recesses.

Preferably the recesses do not extend beyond the steel cords. Therewith is meant that the recesses do not extend beyond the plane perpendicular to the mirror plane that is tangent to the steel cords at the side where the recesses are provided. It is also preferred that some polymer remains between the bottom of the recesses and the plane tangent to the steel cords at the side towards the recesses. The thickness of this polymer 'skin' or 'hide' is for example 2% of 'D'. The main function of it is to protect the steel cords from exposure to moisture.

As mentioned one of the determining factors of the planar bending stiffness is the axial or longitudinal stiffness of the steel cords. With the longitudinal stiffness $(EA)_{sc}$ (in N) of a steel cord is meant the Hooke's constant of the steel cord in a load $(F_{SC})$ vs elongation $(\Delta L/L)$ diagram:

$$F_{SC} = (EA)_{SC} \times (\Delta L/L)$$

E is the modulus of the steel cord and A is the cross sectional metallic surface area i.e. the sum of the cross sectional areas of the individual filaments constituting the steel cord.

Both the longitudinal and bending stiffness of a steel cord scale proportionally with the number of steel filaments in the steel cord. The number of filaments per individual steel cord is preferably between 9 and 75, more preferred from 21 to 49 filaments. When more filaments are used they must be finer in order to fit within the circumscribed diameter 'd'. This reduces the bending stiffness at least in the perpendicular direction. Also the longitudinal stiffness will decrease as less metallic surface in the circumscribed circle of the steel cord is present. This will reduce the in plane bending stiffness (see the term (2) above). In this way a proper choice of the number of filaments affects the bending stiffness in both bending directions. Finer filaments are also better for fatigue.

In order to have a sufficiently stiff flexible rack under tension or compression, the rack should not compress or elongate much under the action of the drive gear. The steel cords form the 'backbone' of the flexible rack and carry most of the tensile or compressive load the remainder being taken by the polymer jacket. Therefore it is best that the steel cords together take 90% or more of the longitudinal stiffness of the flexible rack the remainder being carried by the polymer jacket.

The longitudinal stiffness of a single steel cord $(EA)_{SC}$ is also very much depending on the way in which the filaments are twisted together i.e. the type of construction of the steel cord. Ropes (strands twisted together) for example will always have a lower longitudinal stiffness than single strands with the same metallic cross sectional area. Particularly for rope constructions the lay length of the strands in the rope have an influence on the longitudinal stiffness: shorter lay lengths will result in lower longitudinal stiffness.

The preference for steel cords in the form of ropes is therefore in contradiction with the striving for a high longitudinal stiffness of the flexible rack. When combining two steel cords that are arranged parallel to one another, the combined stiffness of those steel cords is just the sum of the individual longitudinal stiffness's of the steel cords $\Sigma(EA)_{SC}$. So combining steel cords in parallel increases the overall stiffness of the flexible rack.

The presence of a polymer jacket will further add to the longitudinal stiffness of the flexible rack. Although the modulus of the polymer is significantly lower than that of the steel cord there is a substantial area of polymer present in the cross section of the flexible rack, leading to an increase in the longitudinal stiffness of the flexible rack. The total longitudinal stiffness of the flexible rack $(EA)_{Rack}$ is thus the sum of the longitudinal stiffnesses of the two steel cords and the polymer jacket. The 'elongation ratio' of the longitudinal stiffness $ER_{SC}$ that can be attributed to the steel cords is then:

$$ER_{SC} = \frac{\Sigma(EA)_{SC}}{(EA)_{Rack}}$$

This ratio should be at least 90% or equal thereto. If this ratio is lower, the cords will elongate or compress too much and the flexible rack does not work properly: due to the repeated elongation/compression of the steel cords the regular recesses will - after prolonged use - not mesh properly with the gear teeth resulting in a total disruption of the flexible rack. The ratio is preferably higher than or equal to 94%.

In principle the ratio can be up to 100% but not equal thereto. In the case of 100% no polymer jacket is present and in that case no recesses can be present in the longitudinal direction of the flexible rack. The preferred steel cord - polymer jacket combinations have an $ER_{SC}$ below 99% or even below 98%.

The contribution of the steel cords to the longitudinal stiffness of the flexible rack can be determined as follows:

- First the stiffness of one bare steel cord is measured. This is done in the linear region of the force - elongation curve for example between about 10% to about 50% of the breaking load of the steel cord. The longitudinal stiffness of the steel cord corresponds to the slope of the linear region and is expressed in newton;
- The sum of all the longitudinal stiffnesses of every steel cord is made. In case the steel cords are equal this can be done by multiplying the one value of a single steel cord with the number of steel cords;
- Then the polymer jacket is applied. After application of the polymer jacket, the force - elongation curve is again determined in the linear region of the force elongation curve for example in the same load range used for the bare steel cords. The total longitudinal stiffness of the flexible rack corresponds to the slope of the linear region and is expressed in newton.
- The $ER_{SC}$ can be calculated by dividing the longitudinal stiffness of the steel cords summed together by that of the flexible rack.

These measurements are to be performed at room temperature (20 to 22°C)

On the other hand the one or more steel cords should not become too stiff in order to maintain a sufficiently low bending stiffness in the direction perpendicular to the plane of the steel cords. It is therefore desirable that the bending stiffness of the two steel cords combined remains lower than 10% of the total stiffness of the flexible rack in the perpendicular bending direction. As the polymer jacket forms a relatively thick substantially tubular sheet around the steel cord it will have a large influence on the bending stiffness of the flexible rack.

The contribution of the bending stiffness of the steel cords to the total bending stiffness of the flexible rack can be determined in a three point bending test. The bare steel cord is measured as follows:

- The steel cord is supported by two gliding fulcrums 50 times the diameter of the steel cord apart;
- The bending stiffness is derived from the force-deflection point after first deflecting the steel cord over at least 4 times its diameter and then returning to 0.1N force;
- The bending stiffness is calculated in the upward cycle of the second deflection up to a deflection of at least 2 times the diameter of the steel cord.
- Measurements are performed at room temperature.
- The total bending stiffness of the steel cords combined is the sum of the bending stiffnesses of the steel cords individually.
- The same procedure can be followed for the measurement of the bending stiffness of the rack for bending in the direction perpendicular to the plane of the steel cords. The conditions must remain identical.

When bending in a direction perpendicular to the plane of the steel cords, the force-deflection curve is sufficiently linear to extract a bending stiffness.

The contribution of the steel cords can be determined by dividing the sum of the bending stiffness's of the steel cords by the bending stiffness of the flexible rack in the direction perpendicular to the plane of steel cords. This ratio must remain below 10% or below 8% for example 4%.

In a flexible rack the force exerted by the drive gear is conveyed by the meshing recesses to the polymer jacket. The polymer jacket transfers these forces to the steel cords. It is therefore important that the forces on the polymer jacket are transferred well to the steel cords. Therefore the steel cords must anchor well in the polymer jacket. The inventors have found that an anchoring force, in newton, of at least 50xD, D being the diameter of the minimum circumscribed circle in millimetre, is needed to pull off 25 mm of the polymer jacket from the two steel cords at room temperature. If the anchoring force falls below this limit there is a genuine risk that the polymer jacket loosens from the steel cord during use. Better is if the anchoring force is larger than 100xD, 150xD or even larger than 200×D.

As mentioned the use of rope type steel cords and the presence of a wrap or wraps contributes to increased anchorage of the steel cords. Also the presence of 'S' and 'Z' type steel cords improve the anchorage as during pulling both 'screws' block one another.

The flexible rack is intended for use in, or is usable in a drive system. The drive system has a gear that engages with the recesses in the flexible rack. The repeated bending of the flexible rack during use will induce an elongation and hence a repeated strain in the radially outer fibre of the polymer jacket. In order to limit this repeated strain it is best that the diameter 'D' of the minimum circumscribed circle is less than 20% of the diameter of the drive gear or even better less than 15% or even 12.5%. In practice the drive gear will have diameter between 20 to 100 mm, or even between 20 to 50 mm.

The selection of the polymer is a difficult one. The following properties must be balanced:

- The polymer must remain sufficiently stiff at high temperatures of for example 90°C or more and must not become brittle at temperatures down to -40°C or even lower;
- The polymer must be wear resistant as the outer surface will glide in the guide elements of the drive system. Also the teeth of the drive gear engage into the recesses and push and pull against the walls thereof. The polymer must therefore have sufficient stiffness in order not to yield under the pressure of the gear teeth;
- The polymer must be able to enter the steel cords and surround them completely in order to ensure a sufficient grip of the steel cord and to seal the steel cord from the outside.
- The polymer must be sufficiently formable in order to form the jacket around the steel cords and to form the recesses into the jacket.

A suitable polymer must therefore have a flexural modulus according ISO178 between 350 to 1100 N/mm$^2$. A shore D hardness between 60 to 80 is desirable. The tensile strength is of less importance as at the moment it is reached the polymer recesses would already be ruined anyhow. It is not excluded that the polymer is loaded by reinforcing materials such as glass, aramid or carbon fibres, carbon black or silica minerals in order to increase its toughness.

Possible polymers are therefore thermoplastic polymers such as polyurethane elastomers, polyester elastomers, polyamide elastomers, poly(etherimide)-polysiloxane, polyamide or polyester/silicone rubber or polyetheramide. Most preferred are polyester elastomers.

**Brief Description of Figures in the Drawings**

Figure 1: shows a perspective view of an exemplary embodiment of the invention.
Figure 2: shows a cross section of a second embodiment of the inventive flexible rack.
Figure 3: shows a cross section of a third embodiment of the inventive flexible rack.
Within Figures 1 to 3 reference numbers with identical units and tens digits represent identical features over different figure numbers.
Figure 4: shows the Force-Deflection diagram of a fourth embodiment of the flexible rack with bending parallel to the plane of the steel cords (//) and with the bending perpendicular to the plane of the steel cords (⊥).
Figure 5: shows the Force-Deflection diagram of a fifth embodiment of the flexible rack with bending parallel to the plane of the steel cords (//) and with the bending perpendicular to the plane of the steel cords (⊥).
Figure 6: shows the Force-Deflection diagram of a sixth embodiment of the flexible rack with bending parallel to the plane of the steel cords (//) and with the bending perpendicular to the plane of the steel cords (⊥).
Figure 7: shows the Force-Deflection diagram of a seventh embodiment of the flexible rack with bending parallel to the plane of the steel cords (//) and with the bending perpendicular to the plane of the steel cords (⊥).

Within Figures 4 to 7 reference numbers with identical units and tens represent identical features.

**Mode(s) for Carrying Out the Invention**

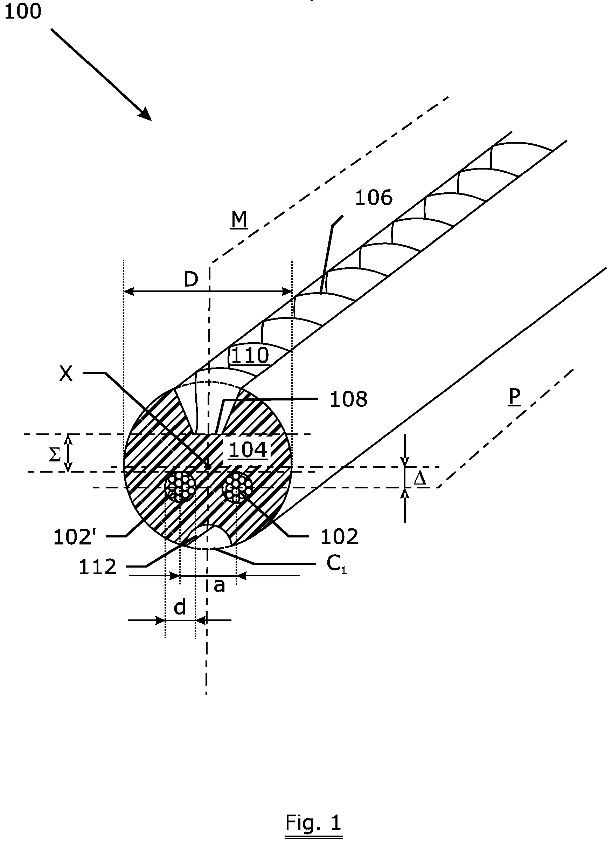

Figure 1 shows an embodiment of the inventive flexible rack 100 in its most generic form. The flexible rack has two steel cords 102, 102' that are embedded in a polymer jacket 104 substantially parallel to one another. In the polymer jacket, recesses 110 are provided along the length of the flexible rack that engage with the teeth of a drive gear (not shown). The recesses have a bottom 108 and between subsequent recesses there is a top 106. The cross section of the flexible rack can be inscribed with a minimum circumscribed circle $C_1$ having a diameter 'D' and a centre 'X'. The mirror plane 'M' approximately mirrors the left side of the flexible rack onto the right side. Of course this mirroring should not be taken in the mathematical meaning of the word, but rather as if looking to a human face: this is never purely symmetrical either. The two steel cords 102, 102' are situated in a plane 'P' that is perpendicular to the mirror plane 'M'. Of the two steel cords 102, 102', one has the left or 'S' lay direction 102 and the other 102' has the right or 'Z' lay direction. A longitudinal groove 112 is also provided in order to prevent the flexible rack from rotating during use.

The steel cords have a diameter 'd' and their centres are separated a distance 'a' from one another. The distance between the plane 'P' through the centres of the steel cords 102,102' and the centre 'X' of the minimum circumscribed circle $C_1$ is indicated with '$\Delta$'. The thickness of the polymer between the bottom of the recess 108 and the top of the steel cords is indicated with '$\Sigma$'.

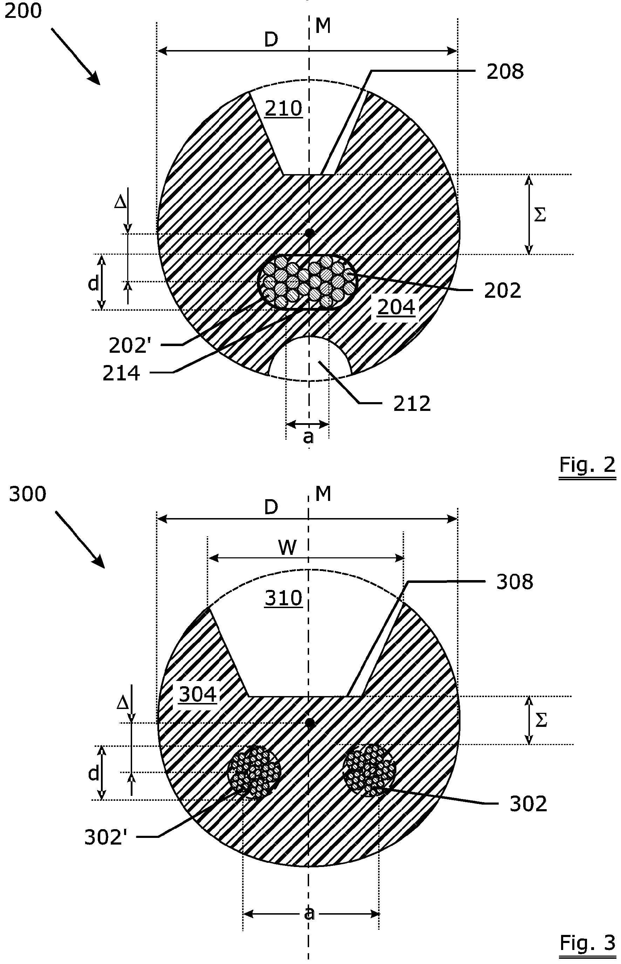

Figure 2 shows the cross section of a second embodiment 200. Here the steel cords 202 and 202' are held in close relationship to one another by means of a wrap wire 214. The wrap 214 is a polyester monofilament of size 0.12 mm twisted around the steel cord with lay length of 3.5 mm. For the type of construction depicted (a $(3\times0.25|9\times0.23)$ compact cord, see below) by use of the wrap, the centres could be held $0.84\times d$ close to one another as the 'S' cord fits into the recesses of the 'Z' cord.

Figure 3 shows the cross section of third embodiment 300. Here the recess 310 is somewhat wider than in the previous examples. The cords 302, 302' are of type $(3+5\times7)\times0.15$ (see further) i.e. are of the steel cord rope type. The centres of the steel cord fall within the transversal width 'W' of the recesses 310.

The procedure to make the flexible rack 100 was as follows:

- A first steel cord of construction $3\times0.25|9\times0.23$ was made. The twelve filaments (3 with a diameter of 0.25 mm, and 9 with a diameter of 0.23 mm) were twisted around each other in one operation at a lay length of 14 mm in 'S' direction whereby care was taken that the 3 core filaments remained central. The diameter of the cord is 1.01 mm. Such an arrangement is known as a compact cord configuration. The filaments were coated by hot dip galvanising and redrawn in order to be better corrosion resistant. This is cord 102;
- With the same filaments, the mirror image of the steel cord was made by simple reversing the turning direction of the tubular strander. The lay length was kept the same. This is 'Z' or right lay direction resulting in cord 102';
- Both steel cords were extruded side by side in a polymer jacket. The polymer jacket is made of IROGRAN D 74 P 4778 available from Huntsman. This is a thermoplastic polyether-polyurethane for injection moulding and extrusion applications. It has a Shore D of 70. The polymer is extruded around the steel cord until a diameter of 5 mm is reached with a round cross section. After the extrusion the cord is allowed to cool down.
- After a brief reheating, up to the softening temperature of the polymer (200°C), recesses are imprinted, embossed perpendicular to the plane of the steel cords with a comb like stamp in the longitudinal direction of the coated steel cords. The recesses have a distance of 3.5 mm from one another so as to engage with the teeth of a drive gear with same tooth spacing. The resulting product is a flexible rack.
- After embossing the distance between the centres of the steel cords was 1.67 mm. The plane of the centres of the steel cord made an angle of 5° relative to the plane perpendicular to the mirror plane.

This is the Example C21.

In a similar way a second flexible rack was produced, but in this case the two steel cords where fed to the extruder through one elongated orifice thereby keeping the steel cords as close as possible to one another. After embossing the centres of the steel cord were 1.09 mm apart. The plane to through the centres of the steel cord was perpendicular to the mirror plane. This is Example C20.

For two other examples steel cords comprising strands twisted together were prepared. Three hot dip galvanised and drawn filaments of diameter 0.15 mm were twisted together with a lay length of 9 mm in Z direction forming a $3\times0.15$ core strand. Five strands each consisting of seven filaments of 0.15 mm were made at lay 10 mm in Z direction: $7\times0.15$. The five strands were twisted around the core strand in S direction with lay 12.5 mm forming a steel cord rope of make $(3+5\times7)\times15$. Again the mirror image with lays 9S, 10S and 12.5Z was prepared. The steel cords have a diameter of 1.20 mm. 302 and 302' show the cross section of such a steel cord. The steel cord has 3+5 i.e. 8 filaments of first order helical deformation and 5x6 i.e. 30 filaments of second order helical deformation.

The two steel cords were fed to the extruder in a side-by-side configuration in the manner as for Example C21. The plane through the centres of the steel cords showed a deviation of 2° with the normal to the mirror plane. The centres of the steel cords were 2.18 mm apart. This is Example C17.

In a similar fashion the paired $(3+5\times7)\times0.15$ steel cords were fed close to one another through a single, elongated orifice to the entrance of the extruder and coated with a polymer jacket. The distance between the centres of the steel cords are 1.46 mm. The plane through the centres of the steel cords showed an angle of 9° relative to the normal of the mirror plane. This is Example C14.

All samples showed a substantially circular shape wherein the ratio of the range between maximum (4.90 mm) and minimum (4.45 mm) caliper diameter over the average of maximum and minimum caliper diameter was about 9.6%. Cross sections show a non-convex cross section where the recesses are present due to the indentation.

Much to their surprise the inventors did not find any rotation of the flexible rack after extrusion. When extruding steel cords wherein the number of steel cords of left direction was not equal to the number of right direction - for example one steel cord - it was noticed that the flexible rack tended to rotate in the 'open direction' of the prevailing steel cord lay direction. With 'open direction' is meant the direction opposite to the lay direction of the steel cord. This was attributed to the inevitable shrinking of the polymer material that compressed the steel cord and hence generated a torque in the open direction. By using an equal number of Z and S cords this torque still occurs but as the torque direction is opposite there is no net torque on the flexible rack.

The samples were subjected to a three point bending test with bending in the plane of the steel cords and perpendicular to the plane of the steel cord as explained in the 'Disclosure of the invention section'. In Figures 4 to 7 the trace of the force 'F' measured in newton on an indentation roll at the middle of the sample deflected over a distance 'S' in millimetre is presented. In each graph the solid line represents the bending force needed to deflect the flexible rack in the plane of the steel cords (parallel //), while the dashed line represents the force recorded when deflected perpendicular to the plane of the steel cords (perpendicular L).

In Figure 4 the salient features of the curves are indicated. When the indentation roll detects a force of 0.1N the deflection is taken to be 0. As the roll deflects further the curve 402 is traced. At a displacement 'S' equal to the diameter of the rack (5.5 mm) the direction of the indentation is reversed at 403. Due to the internal friction in the sample the return trace 404 does not coincide with the upward trace 402. At the point 405 the first cycle is completed. A small permanent deflection occurs (in this case about 0.6 mm). The second cycle is started and a second cycle trace 406 occurs. In this case the deflection is stopped at D/2 i.e. in point 407. The force measured at this point is the 'bending force at D/2 deflection on second cycle' or $F_{2\parallel}(D/2)$. When the roll direction is again reversed the curve reverts to its starting point 405 and the cycle can be repeated.

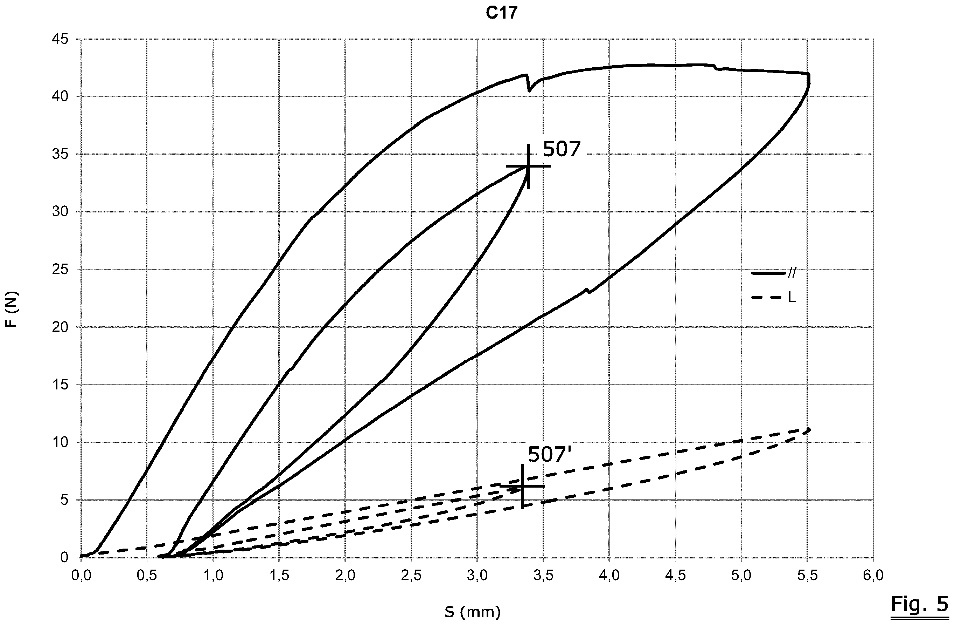

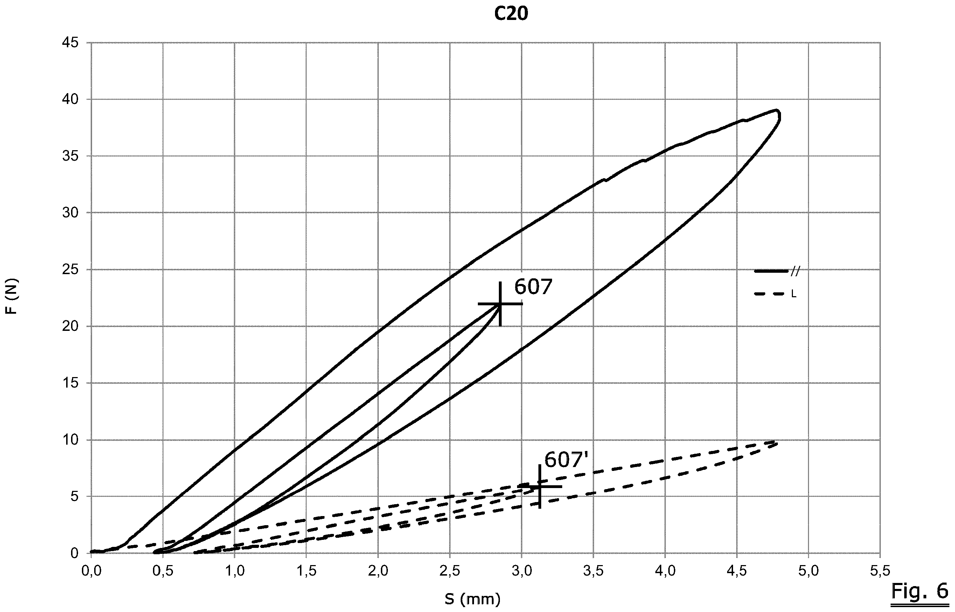

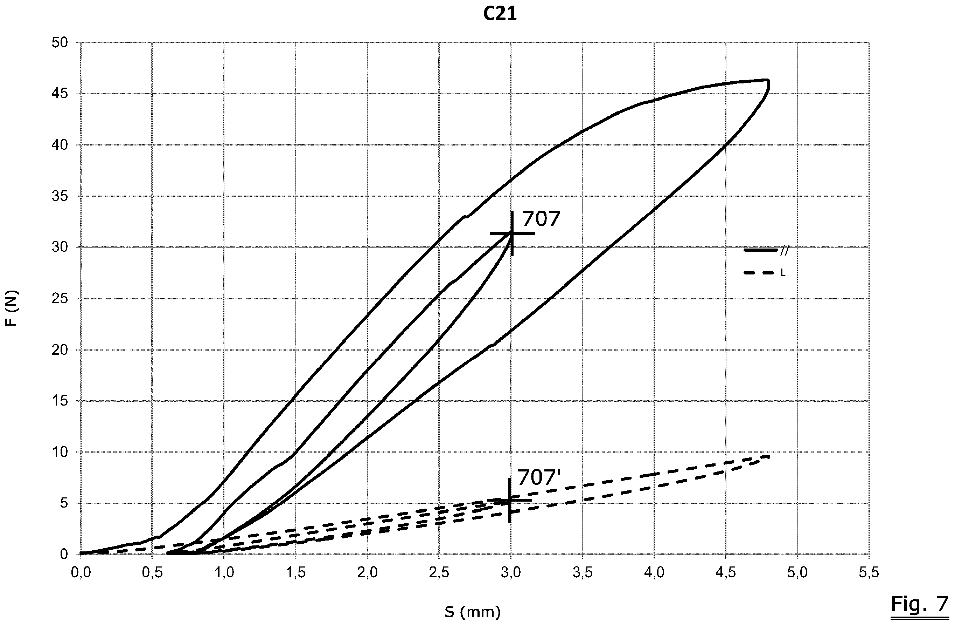

The same procedure can be applied when the deflection is in the direction perpendicular to the plane of the steel cords which is represented by the dashed line. It is apparent that the bending force at D/2 deflection on second cycle at 407' is much lower: $F_{2\perp}(D/2)$. By this procedure it is possible to determine the Ratio between $F_{2\parallel}(D/2)/F_{2\perp}(D/2)$ on the different samples. Figure 4 shows the result obtained on the Example C14, Figure 5: Example C17, Figure 6: Example C20, Figure 7: Example C21.

The results are summarised in Table I:

**Table I**

| Example | $F_{2\parallel}(D/2)$ in N | $F_{2\perp}(D/2)$ in N | Ratio | 'a' in mm | 'd' in mm | 'a/d' |
|---|---|---|---|---|---|---|
| C14 | 26.7 | 7.1 | 3.76 | 1.46 | 1.20 | 1.22 |
| C17 | 33.9 | 6.4 | 5.30 | 2.18 | 1.20 | 1.82 |
| C20 | 21.9 | 5.72 | 3.93 | 1.09 | 1.01 | 1.08 |
| C21 | 28.3 | 4.77 | 5.93 | 1.67 | 1.01 | 1.65 |

The influence of the distance between the centres on the Ratio is apparent. When a flexible rack is needed that must curve out of single plane, the versions C14 and C20 are most preferred (a/d is low). When the flexible rack must remain in a single plane the versions C17 and C21 are more preferred (a/d is high).

Further cross section parameters are summarised in Table II:

**Table II**

| Example | D (mm) | $\Sigma$ (mm) | $\Delta$ (mm) | $\Sigma/D$ (%) | $\Delta/D$ (%) |
|---|---|---|---|---|---|
| C14 | 5.02 | 0.106 | 0.389 | 2.1 | 7.75 |
| C17 | 5.04 | 0.213 | 0.247 | 4.2 | 4.9 |
| C20 | 5.02 | 0.580 | 0.256 | 11.6 | 5.1 |
| C21 | 5.02 | 0.389 | 0.177 | 7.75 | 3.5 |

Next to that the longitudinal stiffness of the bare steel cord and of the complete flexible rack was determined. The results are summarised in Table III (each time average of three measurements):

**Table III**

| Example | Longitudinal Stiffness bare cords (in N) | Longitudinal Stiffness flexible rack (in N) | Contribution cords to rack (in %) |
|---|---|---|---|
| C14 | 2×121879 | 249389 | 97.7 |
| C17 | 2×121879 | 254437 | 95.8 |
| C20 | 2×99736 | 220132 | 90.6 |
| C21 | 2×99736 | 223575 | 89.2 |

While the (3+5×7)×0.15 cord shows a contribution to the longitudinal stiffness of the rack of more than 95%, this is much less than that of the (3×0.25|9×0.23) cord. The inventors attribute this to the larger metallic area of the former steel cord compared to the latter and the fact that the anchorage of the former polymer is about twice as high as that of the latter.

Indeed anchorage tests over a length of 25 mm gave the results of Table IV:

**Table IV**

| Steel cord | Pull-off force (N) |
|---|---|
| (3+5×7)×0.15 | 1 650 |
| (3×0.25|9×0.23) | 882 |

The total force needed to pull two steel cords out of a rack, wherein the polymer has been cut through at 25 mm from the end of the rack is reported. The anchoring of the (3+5×7)×0.15 rope that has second order helical deformed wires is about twice that of the (3×0.25|9×0.23) strands that consists only of first order helical deformed wires. This is because the outer surface of the (3+5×7)×0.15 rope is much 'rougher' than the smooth surface of (3×0.25|9×0.23) strands as the former provides larger openings between the outer strands that hold the polymer.

From the bending curves in the direction perpendicular to the plane of the steel cords the bending stiffness can be derived. This is possible as those curves show a sufficiently linear behaviour from point X05 to X07'. The formula to derive this is based on the classical bending theory:

$$(EI)_{\perp Rack} = \frac{L^3 \cdot \Delta F}{48 \cdot \Delta S}$$

Wherein L is equal to the distance between the supports. The same measurement can be performed on a single, bare steel cord. As a steel cord is centrisymmetric there is only one value.

In a final series of measurements the contribution to the bending stiffness of the steel cords only to the total bending stiffness of the flexible rack in the direction perpendicular to the plane of the steel cords was measured. The results are reproduced in Table V:

**Table V**

| Example | $(EI)_{Cord}$ (Nmm$^2$) | $(EI)_{\perp Rack}$ (Nmm$^2$) | $200 \times (EI)_{Cord}/(EI)_{\perp Rack}$ (%) |
|---|---|---|---|
| C14 | 203 | 14093 | 2.88 |
| C17 | 203 | 13109 | 3.09 |
| C20 | 380 | 9472 | 8.02 |
| C21 | 380 | 8951 | 8.49 |

The stiffness of the bare cord is the stiffness of a single uncoated cord. As a steel cord is centrosymmetric there is only one value. Although the construction (3+5×7)×0.15 has more filaments than the (3×0.25|9×0.23) construction (38 versus 12), the stiffness of the latter is higher due to the fact that the diameters of the filaments are larger. Surprisingly, the higher stiffness of the (3×0.25|9×0.23) strand does not translate into a concomitantly higher stiffness of the flexible rack. The reason for this discrepancy is unclear. It results in a much higher contribution to the stiffness of the flexible rack for the $(3 \times 0.25 | 9 \times 0.23)$ than for the $(3+5 \times 7) \times 0.15$ steel cord. There appears to be a minor influence of the out-of-plane position of the steel cords in the cross section ($\Delta$).

The inventors conclude that cords comprising second order helical deformed filaments appear to have advantages for use in a flexible rack compared to cords comprising only up to first order deformed filaments due to their better overall anchorage in the polymer.

By adjusting the distance between the steel cords, a flexible rack can be made that can also bend in a direction out of the plane as for example is necessary in a drive system for a sun roof. On the other hand, when the distance between the steel cords increases, the bending becomes predominantly in one plane. Such flexible racks are therefore useful in applications wherein bending in only plane is preferred for example for the drive system of a window pane in the door of a car.

Furthermore, the balancing of Z and S types cords in a flexible rack overcomes the problem of having a preferred rotation direction. The rack remains torque neutral and straight.

**Claims**

1. A flexible rack (100, 200, 300) for engagement with the gear of a drive system, said flexible rack (100, 200, 300) comprising two steel cords (102, 102', 202, 202', 302, 302') disposed in the longitudinal direction of said flexible rack (100, 200, 300) in substantially parallel relationship to one another, said steel cords having a circumscribed diameter 'd', said flexible rack (100, 200, 300) further comprising a polymer jacket (104, 204, 304) wherein a cross section of said flexible rack is inscribable within a minimum circumscribed circle ($C_1$) of diameter 'D', wherein a mirror plane (M) mirrors the cross section of said flexible rack (100, 200, 300) onto itself, wherein said two steel cords (102, 102', 202, 202', 302, 302') are arranged in a plane (P) substantially perpendicular to said mirror plane (M), within said two steel cords (102, 102', 202, 202', 302, 302') the one steel cord (102, 202, 302) is the mirror construction of the other (102', 202', 302') **characterised in that**, the polymer jacket is provided with recesses along the length of said flexible rack for receiving the teeth of said gear, and **in that** the cross section of said flexible rack is of a substantially circular shape, and **in that** the centres of adjacent steel cords in a cross section of said flexible rack are separated by a distance of not less than '0.80×d' and not more than '2.5×d'.

2. The flexible rack (100, 200, 300) according to claim 1 wherein the circumscribed circle diameter 'D' is between 3 and 8 mm.

3. The flexible rack (100, 200, 300) according to claim 1 wherein the circumscribed diameter of the steel cord 'd' is larger than 0.03 times 'D' and is less than 0.40 times 'D'.

4. The flexible rack (300) according to any one of claims 1 to 3 wherein said two steel cords (302, 302') comprise filaments of second order helical deformation, said second order helical deformation corresponding to a deformation of a helix whereof the central axis of that helix on its turn has the form of a helix.

5. The flexible rack (200) according to any one of claims 1 to 4 wherein said steel cords (202, 202') are held together by means of one, two or more wrap threads (214).

6. The flexible rack (100, 200, 300) according to any one of claims 1 to 5 wherein in a three point bending test the bending force at D/2 deflection on second cycle of said flexible rack in the plane of said steel cords is at least 1.5 times the bending force at D/2 deflection on second cycle perpendicular to the plane of said steel cords.

7. The flexible rack according to claim 6 wherein the bending force at D/2 deflection on second cycle of said flexible rack in the plane of said steel cords is at most 10 times the bending force at D/2 deflection on second cycle perpendicular to said plane.

8. The flexible rack according to any one of claims 1 to 7 wherein the centres of said two steel cords (102, 102', 202, 202', 302, 302') remain within the transversal width (W) of said recesses (110, 210, 310), wherein said transversal width (W) is equal to that dimension perpendicular to the mirror plane (M) of said flexible rack where the recesses are at maximum width.

9. The flexible rack according to any one of claims 1 to 8 wherein the total width covered by said steel cords (102, 102', 202, 202', 302, 302') is at least 40% of the transversal width of said recesses, wherein said transversal width (W) is equal to that dimension perpendicular to the mirror plane (M) of said flexible rack where said recesses are at maximum width.

10. The flexible rack according to any one of claims 1 to 9 wherein the distance between the centre of said minimum circumscribed circle (X) and the plane (P) through the centres of said steel cords (102, 102', 202, 202', 302, 302') is within 20 % of the diameter 'D'.

11. The flexible rack according to claim 10 wherein the thickness ($\Sigma$) of the polymer between said two steel cords (102, 102', 202, 202', 302, 302') and the bottom of said recesses is at least 2% of the diameter 'D' of said minimum circumscribed circle.

12. The flexible rack according to any one of claims 1 to 11 wherein the longitudinal stiffness of said two steel cords (102, 102', 202, 202', 302, 302') taken together is at least 90% of the total longitudinal stiffness of said flexible rack.

13. The flexible rack according to any one of claims 1 to 12 wherein the bending stiffness of said two or more steel cords (102, 102', 202, 202', 302, 302') taken together in the direction perpendicular to the plane through the centres of said steel cords is at most 10% of the total bending stiffness of said flexible rack in the direction perpendicular to the plane through the centres of said steel cords (102, 102', 202, 202', 302, 302').

14. The flexible rack according to any one of claims 1 to 13 wherein a force of at least $50 \times D$ in newton is needed to axially pull said polymer jacket from said two steel cords (102, 102', 202, 202', 302, 302') over a length of 25 mm, 'D' being expressed in millimetre.

15. A drive system comprising the flexible rack according to any one of claims 1 to 14, said drive system comprising a drive gear wherein the diameter of said minimum circumscribed circle 'D' is less than 20% of the diameter of the drive gear.

**Patentansprüche**

1. Flexible Zahnstange (100, 200, 300) zum Eingriff mit dem Zahnrad eines Antriebssystems, wobei die flexible Zahnstange (100, 200, 300) zwei Stahlcorde (102, 102', 202, 202', 302, 302') umfasst, die in der Längsrichtung der flexiblen Zahnstange (100, 200, 300) in im Wesentlichen paralleler Beziehung zueinander angeordnet sind, wobei die Stahlcorde einen umbeschriebenen Durchmesser 'd' haben, wobei die flexible Zahnstange (100, 200, 300) ferner einen Polymermantel (104, 204, 304) umfasst, wobei ein Querschnitt der flexiblen Zahnstange in einen minimalen umbeschriebenen Kreis ($C_1$) mit dem Durchmesser 'D' einbeschreibbar ist, wobei eine Spiegelebene (M) den Querschnitt der flexiblen Zahnstange (100, 200, 300) auf sich selbst spiegelt, wobei die beiden Stahlcorde (102, 102', 202, 202', 302, 302') in einer Ebene (P) angeordnet sind, die im Wesentlichen senkrecht zu der Spiegelebene (M) angeordnet ist, wobei innerhalb der beiden Stahlcorde (102, 102', 202, 202', 302, 302') der eine Stahlcord (102, 202, 302) die Spiegelkonstruktion des anderen (102', 202', 302') ist, **dadurch gekennzeichnet, dass** der Polymermantel entlang der Länge der flexiblen Zahnstange mit Aussparungen zur Aufnahme der Zähne des Zahnrads versehen ist und dass der Querschnitt der flexiblen Zahnstange im Wesentlichen kreisförmig ist und dass die Mitten benachbarter Stahlcorde in einem Querschnitt der flexiblen Zahnstange mit einem Abstand von mindestens '0,80×d' und höchstens '2,5×d' getrennt sind.

2. Flexible Zahnstange (100, 200, 300) nach Anspruch 1, wobei der umbeschriebene Kreisdurchmesser 'D' zwischen 3 und 8 mm beträgt.

3. Flexible Zahnstange (100, 200, 300) nach Anspruch 1, wobei der umbeschriebene Durchmesser des Stahlcords 'd' größer als das 0,03-Fache von 'D' und kleiner als das 0,40-Fache von 'D' ist.

4. Flexible Zahnstange (300) nach einem der Ansprüche 1 bis 3, wobei die beiden Stahlcorde (302, 302') Filamente mit einer schraubenlinienartigen Deformation zweiter Ordnung umfassen, wobei die schraubenlinienartige Deformation zweiter Ordnung einer Deformation einer Helix entspricht, wobei die mittlere Achse dieser Helix in ihrer Windung die Form einer Helix hat.

5. Flexible Zahnstange (200) nach einem der Ansprüche 1 bis 4, wobei die Stahlcorde (202, 202') mittels eines, zweier oder mehr Wickelsträngen (214) zusammengehalten werden.

6. Flexible Zahnstange (100, 200, 300) nach einem der Ansprüche 1 bis 5, wobei bei einem Dreipunkt-Biegeversuch die Biegekraft bei D/2-Auslenkung beim zweiten Zyklus der flexiblen Zahnstange in der Ebene der Stahlcorde mindestens das 1,5-Fache der Biegekraft bei D/2-Auslenkung beim zweiten Zyklus senkrecht zu der Ebene der Stahlcorde beträgt.

7. Flexible Zahnstange nach Anspruch 6, wobei die Biegekraft bei D/2-Auslenkung beim zweiten Zyklus der flexiblen Zahnstange in der Ebene der Stahlcorde höchstens das 10-Fache der Biegekraft bei D/2-Auslenkung beim zweiten Zyklus senkrecht zu der Ebene beträgt.

8. Flexible Zahnstange nach einem der Ansprüche 1 bis 7, wobei die Mitten der beiden Stahlcorde (102, 102', 202, 202', 302, 302') in der Querbreite (W) der Aussparungen (110, 210, 310) bleiben, wobei die Querbreite (W) gleich der Abmessung senkrecht zu der Spiegelebene (M) der flexiblen Zahnstange ist, wo die Aussparungen die maximale Breite haben.

9. Flexible Zahnstange nach einem der Ansprüche 1 bis 8, wobei die von den Stahlcorden (102, 102', 202, 202', 302, 302') abgedeckte Gesamtbreite mindestens 40% der Querbreite der Aussparungen beträgt, wobei die Querbreite (W) gleich der Abmessung senkrecht zu der Spiegelebene (M) der flexiblen Zahnstange ist, wo die Aussparungen die maximale Breite haben.

10. Flexible Zahnstange nach einem der Ansprüche 1 bis 9, wobei der Abstand zwischen der Mitte des minimalen umbeschriebenen Kreises (X) und der Ebene (P) durch die Mitten der Stahlcorde (102, 102', 202, 202', 302, 302') innerhalb von 20% des Durchmesser 'D' liegt.

11. Flexible Zahnstange nach Anspruch 10, wobei die Dicke ($\Sigma$) des Polymers zwischen den beiden Stahlcorden (102, 102', 202, 202', 302, 302') und dem Boden der Aussparungen mindestens 2% des Durchmesser 'D' des minimalen umbeschriebenen Kreises beträgt.

12. Flexible Zahnstange nach einem der Ansprüche 1 bis 11, wobei die Längssteifigkeit der beiden Stahlcorde (102, 102', 202, 202', 302, 302') zusammengenommen mindestens 90% der Gesamtlängssteifigkeit der flexiblen Zahnstange beträgt.

13. Flexible Zahnstange nach einem der Ansprüche 1 bis 12, wobei die Biegesteifigkeit der zwei oder mehr Stahlcorde (102, 102', 202, 202', 302, 302') zusammengenommen in der senkrecht zu der Ebene durch die Mitten der Stahlcorde verlaufenden Richtung höchstens 10% der Gesamtbiegesteifigkeit der flexiblen Zahnstange in der senkrecht zu der Ebene durch die Mitten der Stahlcorde (102, 102', 202, 202', 302, 302') verlaufenden Richtung beträgt.

14. Flexible Zahnstange nach einem der Ansprüche 1 bis 13, wobei eine Kraft von mindestens 50xD in Newton notwendig ist, um den Polymermantel axial über eine Länge von 25 mm von den beiden Stahlcorden (102, 102', 202, 202', 302, 302') abzuziehen, wobei 'D' in Millimetern ausgedrückt ist.

15. Antriebssystem, umfassend die flexible Zahnstange nach einem der Ansprüche 1 bis 14, wobei das Antriebssystem ein Antriebszahnrad umfasst, wobei der Durchmesser 'D' des minimalen umbeschriebenen Kreises weniger als 20% des Durchmessers des Antriebszahnrads beträgt.

**Revendications**

1. Dispositif à crémaillère souple (100, 200, 300) pour mise en prise avec l'engrenage d'un système d'entraînement, ledit dispositif à crémaillère souple (100, 200, 300) comprenant deux câbles d'acier (102, 102', 202, 202', 302, 302') disposés dans la direction longitudinale dudit dispositif à crémaillère souple (100, 200, 300) en relation sensiblement parallèle l'un par rapport à l'autre, lesdits câbles d'acier ayant un diamètre circonscrit « d », ledit dispositif à crémaillère souple (100, 200, 300) comprenant en outre une enveloppe en polymère (104, 204, 304)

une section transversale dudit dispositif à crémaillère souple pouvant être inscrite dans un cercle circonscrit minimum ($C_1$) de diamètre « D », un plan miroir (M) reflétant la section transversale dudit dispositif à crémaillère souple (100, 200, 300) sur elle-même, lesdits deux câbles d'acier (102, 102', 202, 202', 302, 302') étant disposés dans un plan (P) sensiblement perpendiculaire audit plan miroir (M), à l'intérieur desdits deux câbles d'acier (102, 102', 202, 202', 302, 302'), le premier câble d'acier (102, 202, 302) étant la construction miroir de l'autre (102', 202', 302')

**caractérisé en ce que** l'enveloppe en polymère est pourvue d'évidements sur la longueur dudit dispositif à crémaillère souple pour recevoir les dents dudit engrenage, et **en ce que** la section transversale dudit dispositif à crémaillère souple est de forme sensiblement circulaire, et **en ce que** les centres de câbles d'acier adjacents dans une section transversale dudit dispositif à crémaillère souple sont séparés par une distance qui n'est pas inférieure à « 0,80 x d » et pas supérieure à « 2,5 x d ».

2. Dispositif à crémaillère souple (100, 200, 300) selon la revendication 1, le diamètre « D » du cercle circonscrit étant compris entre 3 et 8 mm.

3. Dispositif à crémaillère souple (100, 200, 300) selon la revendication 1, le diamètre circonscrit du câble d'acier « d » étant supérieur à 0,03 fois « D » et inférieur à 0,40 fois « D ».

4. Dispositif à crémaillère souple (300) selon l'une quelconque des revendications 1 à 3, lesdits deux câbles d'acier (302, 302') comprenant des filaments à déformation hélicoïdale de second ordre, ladite déformation hélicoïdale de second ordre correspondant à une déformation d'une hélice dont l'axe central a, à son tour, la forme d'une hélice.

5. Dispositif à crémaillère souple (200) selon l'une quelconque des revendications 1 à 4, lesdits câbles d'acier (202, 202') étant maintenus ensemble au moyen d'un, de deux fils d'enroulement (214) ou plus.

6. Dispositif à crémaillère souple (100, 200, 300) selon l'une quelconque des revendications 1 à 5, lors d'un essai de flexion en trois points, la force de flexion à la déviation D/2 sur un second cycle dudit dispositif à crémaillère souple dans le plan desdits câbles d'acier étant au moins 1,5 fois la force de flexion à la déviation D/2 sur un second cycle perpendiculaire au plan desdits câbles d'acier.

7. Dispositif à crémaillère souple selon la revendication 6, la force de flexion à la déviation D/2 sur un second cycle dudit dispositif à crémaillère souple dans le plan desdits câbles d'acier étant au plus égale à 10 fois la force de flexion à la déviation D/2 sur le second cycle perpendiculaire audit plan.

8. Dispositif à crémaillère souple selon l'une quelconque des revendications 1 à 7, les centres desdits deux câbles d'acier (102, 102', 202, 202', 302, 302') restant dans la largeur transversale (W) desdits évidements (110, 210, 310), ladite largeur transversale (W) étant égale à la dimension perpendiculaire au plan miroir (M) dudit dispositif à crémaillère souple où les évidements sont à leur largeur maximale.

9. Dispositif à crémaillère souple selon l'une quelconque des revendications 1 à 8, la largeur totale couverte par lesdits câbles d'acier (102, 102', 202, 202', 302, 302') étant au moins égale à 40 % de la largeur transversale desdits évidements, ladite largeur transversale (W) étant égale à cette dimension perpendiculaire au plan miroir (M) dudit dispositif à crémaillère souple où lesdits évidements sont à leur largeur maximale.

10. Dispositif à crémaillère souple selon l'une quelconque des revendications 1 à 9, la distance entre le centre dudit cercle circonscrit minimum (X) et le plan (P) passant par les centres desdits câbles d'acier (102, 102', 202, 202', 302, 302') ne différant pas de plus de 20 % du diamètre « D ».

11. Dispositif à crémaillère souple selon la revendication 10, l'épaisseur (x) du polymère entre lesdits deux câbles d'acier (102, 102', 202, 202', 302, 302') et le fond desdits évidements étant au moins égale à 2 % du diamètre « D » dudit cercle circonscrit minimum.

12. Dispositif à crémaillère souple selon l'une quelconque des revendications 1 à 11, la rigidité longitudinale desdits deux câbles d'acier (102, 102', 202, 202', 302, 302') pris ensemble étant au moins égale à 90 % de la rigidité longitudinale totale dudit dispositif à crémaillère souple.

13. Dispositif à crémaillère souple selon l'une quelconque des revendications 1 à 12, la rigidité en flexion desdits deux ou plusieurs câbles d'acier (102, 102', 202, 202', 302, 302') pris ensemble dans la direction perpendiculaire au plan passant par les centres desdits câbles d'acier étant au plus égale à 10 % de la rigidité en flexion totale dudit dispositif à crémaillère souple dans la direction perpendiculaire au plan passant par les centres desdits câbles d'acier (102, 102', 202, 202', 302, 302').

14. Dispositif à crémaillère souple selon l'une quelconque des revendications 1 à 13, une force d'au moins 50xD en Newton étant nécessaire pour tirer axialement ladite enveloppe en polymère à partir desdits deux câbles d'acier (102, 102', 202, 202', 302, 302') sur une longueur de 25 mm, « D » étant exprimé en millimètre.

15. Système d'entraînement comprenant le dispositif à crémaillère souple selon l'une quelconque des revendications 1 à 14, ledit système d'entraînement comprenant un engrenage d'entraînement, le diamètre dudit cercle circonscrit minimum « D » étant inférieur à 20 % du diamètre de l'engrenage d'entraînement.

100

Fig. 1

Fig. 2

Fig. 3

Fig. 4

C17

Fig. 5

C20

Fig. 6

607

607'

F (N)

S (mm)

**C21**

EP 3 390 863 B1

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3137491 A
- US 6786540 B
- US 1983962 A
- DE 3513093
- DE 7136899 U
- DE 1003517
- EP 0499135 A
- US 20120032476 A1
- JP 2011247311 A
- US 5150631 A